# EUROPEAN PATENT SPECIFICATION

(11) **EP 2 557 432 B1**
(45) Date of publication and mention of the grant of the patent: **11.10.2017**
(21) Application number: 12178581.0
(22) Date of filing: 31.07.2012
(51) Int. Cl.: G01S 5/00, G01S 19/16, G08G 1/123, G01S 19/34, B60R 25/10

(54) **Position transmission device for vehicle**
Positionsübermittlungsvorrichtung für ein Fahrzeug
Dispositif de transmission de position pour véhicule

(30) Priority: 06.08.2011 JP 2011172438
(43) Date of publication of application: 13.02.2013
(73) Proprietor: Honda Motor Co., Ltd., Tokyo 107-8556 (JP)
(72) Inventor: Konno, Takeshi, Saitama, 351-0193 (JP); Yamate, Naoyuki, Saitama, 351-0193 (JP); Hirakata, Yoshiaki, Saitama, 351-0193 (JP)
(74) Representative: Ilgart, Jean-Christophe

(56) References cited:
- FR-A1- 2 842 493
- GB-A- 2 383 216
- JP-A- 2010 208 382
- US-A1- 2006 109 106
- US-A1- 2009 040 043
- US-A1- 2009 040 102

## Description

### [Technical Field]

The present invention relates to a position transmission device for a vehicle according to claim 1, and relates specifically to a position transmission device for a vehicle in which the vehicle transmits position information of an own vehicle to a predetermined entity to be notified, thereby, in the entity to be notified the present position and the moving history of the vehicle are recognized based on the received position information and are used for tracking the vehicle according to the necessity.

### [Background Art]

In the Patent Literature 1, an abnormality detecting and vehicle tracking device is disclosed which is so constituted that, when a signal exceeding a predetermined value is outputted from an acceleration sensor, microphone and the like attached to a vehicle body while the vehicle stops, the vehicle is determined to be in an abnormal state, and a horn, a lamp device and the like of the vehicle are activated to give an alarm.

This abnormality detecting and vehicle tracking device is provided with a transportation mode forbidding execution of unnecessary alarming and vehicle tracking by rocking, vibration and the like transmitted from a transport vehicle while a vehicle is transported from a factory to a sales shop using a transport vehicle such as a truck, carrier car and the like. With provision of the transportation mode, a nuisance by the sound of an alarm and consumption of batteries can be suppressed.

### [Citation List]

### [Patent Literature]

JP 2010 208382 A discloses an apparatus which does not set off an alarm after a battery is removed by switching operational modes. The apparatus includes an internal power supply which is capable of supplying power to an acceleration sensor, and a CPU when an in-vehicle battery is unconnected to a motorcycle, and switching means which selects an operational mode provided to an abnormality sensing apparatus.

GB 2 383 216 A discloses a device which transmits its geographical location over a wireless/cellular/network/ personal digital assistant (PDA) to a mobile or static control centre when a motion detector detects motion of the device. This information can be displayed visually or as an audio warning to allow tracking of the device. The geographical information can be obtained from the global positioning system (GPS) where data is transmitted from satellites or from neighbouring terminals, or from pre programmed beacons.

### [Summary of Invention]

### [Technical Problem]

During transportation of a vehicle provided with a device described in the Patent Literature 1 by a transportation and the like, the action mode is switched to the transportation mode in order to save consumption of batteries. However, the transportation mode is a mode in which the batteries are prevented from being consumed by removing an on-vehicle battery and forbidding power consumption of internal batteries, and therefore vehicle tracking is not possible during transportation by the truck and the like.

On the other hand, it is probable that a third party moves the vehicle in transportation while the vehicle stops in the middle of the transportation by the truck and the like, and therefore it is not preferable to entirely stop a tracking device of the vehicle. However, when a normal mode is selected during transportation, an alarm sounds and the batteries are consumed, and the object of providing the transportation mode cannot be achieved. Therefore, a method is desired which allows vehicle tracking even during transportation and allows to suppress the power consumption.

An object of the present invention is to provide a position transmission device for a vehicle that solves the problems described above, is capable of tracking the vehicle in the middle of transportation, suppresses the electric power consumption during transportation, and is capable of suppressing consumption of batteries.

### [Solution to Problem]

In order to achieve the object, the first feature of the present invention is a position transmission device for a vehicle including abnormality detection means (31) that outputs an abnormality detection signal when an abnormality state of the vehicle is detected based on acceleration variation occurred in the vehicle, transmission means (4) that transmits position information of the vehicle to a predetermined entity to be notified, and an alarm device (30) that responds to the abnormality detection signal and gives an alarm, in which an action mode of the position transmission device is provided with an ignition ON mode in a state an ignition switch (15) is ON, a sleep mode in which, in a state the ignition switch (15) is OFF, the transmission means (4) transmits the position information at a first period (T1), and the alarm device (30) is driven whenever the abnormality detection signal is outputted, and a truck mode in which, in a state the ignition switch (15) is OFF, the position transmission device responds to the abnormality detection signal and lowers an output of the alarm device (30) than an output in the sleep mode, and the transmission means (4) transmits the position information at a second period (T2) shorter than the first period (T1), and mode switch means (34) is provided that selects the truck mode when predetermined operation means out of operation means that control actions of the vehicle is operated in a predetermined operation pattern, and switches an action mode to the ignition ON mode when the ignition switch (15) is operated ON in each of the sleep mode and the truck mode.

Also, the second feature of the present invention is that the ignition ON mode is a mode in which the position information is transmitted at a third period (T3) shorter than the second period (T2).

Also, the third feature of the present invention is that actions of the abnormality detection means (31) and the alarm device (30) are stopped in the truck mode.

Also, the fourth feature of the present invention is that it is constituted to give an answerback in entering the sleep mode and the truck mode respectively.

Also, the fifth feature of the present invention is that the answerback is driven in a mutually different form in entering the sleep mode and in entering the truck mode.

Also, the sixth feature of the present invention is that the answerback is given using the alarm device.

Also, the seventh feature of the present invention is that the alarm device (30) is either a horn (13) or a lamp device (14).

### [Advantageous Effects of Invention]

According to the present invention having the first and second features, because such an event that an alarm sounds by picking vibration and the like of a transport vehicle even during transportation of a vehicle does not happen, the electric power is not consumed uselessly, and a new truck mode capable of tracking even when the vehicle has been moved can be set. Also, in the new truck mode, the transmission period of the own vehicle position information is made longer than that in the ignition ON mode, and therefore the electric power consumption can be minimized. Furthermore, in setting of the new truck mode, operation means controlling the action of the vehicle is operated in a predetermined operation pattern to allow shifting to the truck mode, therefore the setting is easy, and a third party who cannot be aware of predetermined operation means and operation pattern cannot switch the action mode to the truck mode to turn off an abnormality detection section and an alarm drive section.

According to the present invention having the first and second features, the third party who cannot be aware of predetermined operation means and operation pattern cannot switch the action mode to the truck mode to turn off the abnormality detection section and the alarm drive section.

Particularly, according to the present invention having the third feature, because abnormality detection and alarm action are stopped in the truck mode, the electric power consumption can be further suppressed.

According to the present invention having the fourth feature, the event that the mode has been switched can be recognized easily. Particularly, according to the present invention having the fifth feature, to which mode the action mode has been switched can be recognized by the answerback.

According to the present invention having the sixth and seventh features, because an existing device of the vehicle can be used as an alarm device in detecting abnormality, an additional device is not required.

### [Brief Description of Drawings]

[Fig. 1] Fig. 1 is a system constitution drawing including a motorcycle mounted with a position transmission device in relation with an embodiment of the present invention.
[Fig. 2] Fig. 2 is a constitution drawing of an electrical system of the motorcycle.
[Fig. 3] Fig. 3 is a functional block diagram showing a constitution of the position transmission device.
[Fig. 4] Fig. 4 is a drawing showing functions of respective action modes.
[Fig. 5] Fig. 5 is a timing chart showing actions of an ignition ON mode and a sleep mode of the position transmission device.
[Fig. 6] Fig. 6 is a timing chart showing the actions of the ignition ON mode and a truck mode of the position transmission device.
[Fig. 7] Fig. 7 is a timing chart showing actions in relation with a modification of an ignition ON mode and a truck mode of a position transmission device.

### [Description of Embodiments]

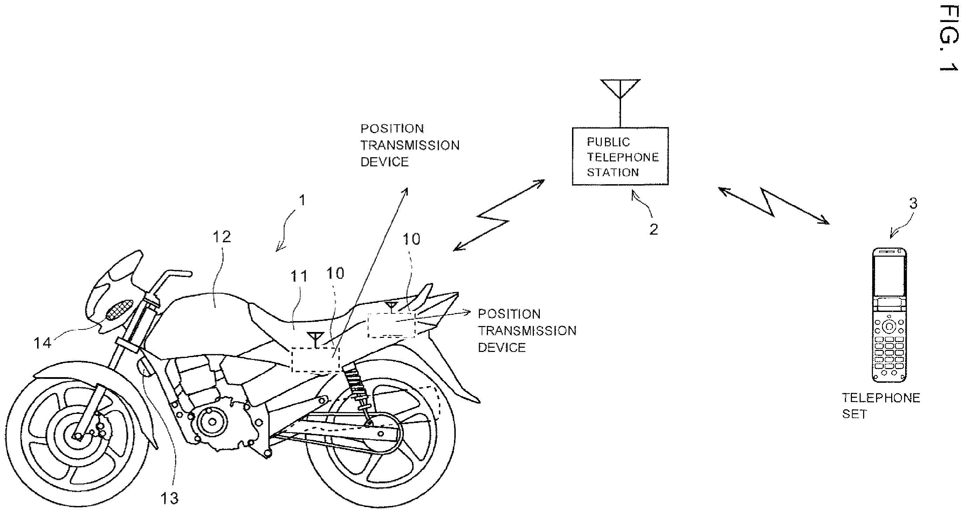

An embodiment of the present invention will be described below referring to the drawings. Fig. 1 is a constitution drawing of a system in which a position transmission device in relation with an embodiment of the present invention is applied to a motorcycle. A position transmission device 10 is a control device not having operation means such as a switch and a button, is stored for example in a resin case of a generally rectangular parallelepiped of approximately 100 mm width×100 mm length×20 mm thickness, and is disposed in a position to which a third party hardly gets access such as a lower part of a seat 11 and a lower part of a fuel tank 12 of a motorcycle 1. Here, an example in which the position transmission devices 10 are disposed in two positions in the lower part of the seat 11 is shown, however the position transmission device 10 only has to be arranged in either one position.

The position transmission device 10 has a function of detecting that a vehicle is in an abnormal state when acceleration variation occurs due to vibration, impact and the like by a force applied from the outside while the motorcycle 1 stops. Specifically, abnormality detection means can be achieved as a function (or a software) of an acceleration sensor and a microcomputer determining that the acceleration detected by the acceleration sensor is of a level equal to or greater than a threshold value and the magnitude and direction thereof vary. The acceleration sensor may be arranged inside the position transmission device 10, or otherwise may be arranged within the motorcycle 1 departing from the position transmission device 10 so as to supply a detection signal to the position transmission device 10.

The position transmission device 10 includes position transmission means transmitting the position information (own vehicle position information) of the motorcycle 1 to a predetermined entity to be notified and alarm drive means driving a device set beforehand as an alarm device such as a horn 13 and a lamp device 14 in an abnormal state. The alarm device is not limited to the horn 13, the lamp device 14 and the like, but only has to be one that can give an alarm on an abnormal state of the motorcycle 1 by sound or vibration. Also, the horn 13, the lamp device 14 and the like are used also as an answerback device in switching an action mode described below.

The position transmission device 10 includes a wireless transmitting and receiving device (not shown) and drives the transmitting and receiving device to make them transmit the own vehicle position information. The own vehicle position information transmitted is received by a telecommunication terminal 3 arranged outside the vehicle through a public telephone station (base station) 2. The telecommunication terminal 3 is a personal computer, a cellular phone and the like registered beforehand as a entity to be notified of the own vehicle position information, and has voice output means and a map display function displaying the position information of the motorcycle 1 by voice or a map based on the own vehicle position information. Here, the cellular phone is assumed as the telecommunication terminal 3 of the entity to be notified.

The own vehicle position information can be obtained by a known method based on the detected information of a GPS (global positioning system), gyro, acceleration sensor, vehicle speed sensor and the like controlling an on-vehicle navigation system. The acceleration sensor used for the navigation system may be one that can also serve as an acceleration sensor in the abnormality detection means of the own vehicle.

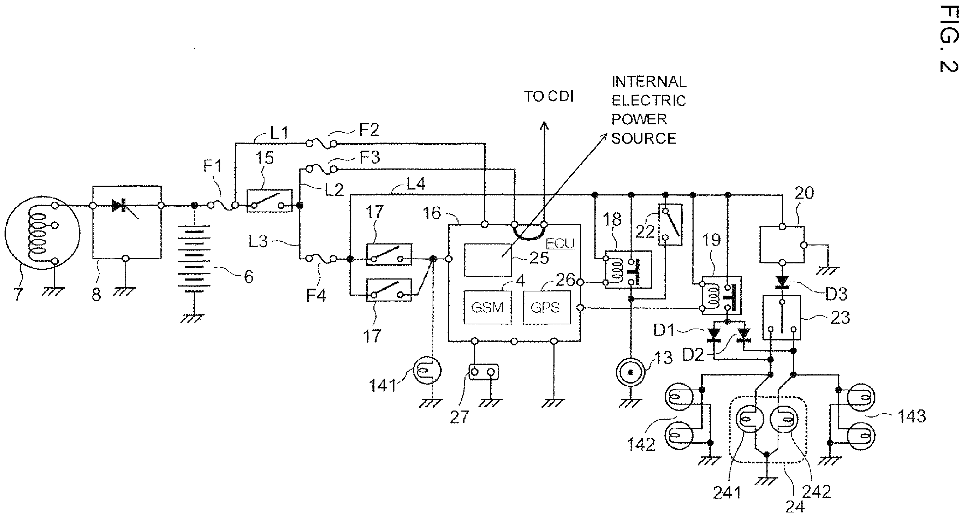

Fig. 2 is a constitution drawing of an electrical system of the motorcycle. In Fig. 2, the electrical system includes a battery 6 as an electric power source. An AC generator 7 is connected to an engine not shown, rotates with the engine being a drive source, and generates the alternating current. A regulator 8 converts the alternating current generated by the AC generator 7 to the direct current and adjusts the voltage. The battery 6 is charged by the direct current outputted from the regulator 8.

The output side of the regulator 8 and the plus side of the battery 6 are connected to an ignition switch 15 through a main fuse F1. A branch line L1 connected to the middle of the main fuse F1 and the ignition switch 15 is connected to an ECU 16 through a fuse F2. Further, the output side of the ignition switch 15 is branched into two, one branch line L2 is connected to the ECU 16 through a fuse F3, and the other branch line L3 is connected to the ECU 16 through a fuse F4 and a stop switch 17.

A line L4 branched from the middle of the fuse F4 and the stop switch 17 is wired as a power source line of a horn relay 18, a hazard relay 19 and a turn indicator relay 20. Two stop switches 17 are arranged in parallel corresponding to a front wheel brake operation section and a rear wheel brake operation section respectively and detect the on-off operation of front and rear brake operation devices (a brake lever and a foot brake) arranged in the motorcycle 1. The output side of the stop switches 17 is connected to the ECU 16 and a stop lamp 141.

One end of a coil of the horn relay 18 is connected to the line L4, and the other end is connected to the ECU 16. Similarly, one end of a coil of the hazard relay 19 is connected to the line L4, and the other end is connected to the ECU 16. With respect to the contact point of the horn relay 18, one end is connected to the line L4, and the other end is earthed through the horn 13. A horn switch 22 is arranged in parallel to the contact point of the horn relay 18. The horn 13 is driven when the horn switch 22 is pressed or when the horn relay 18 is turned ON by the command from the ECU 16.

With respect to the contact point of the hazard relay 19, one end is connected to the line L4, and the other end is connected to anodes of diodes D1, D2. A cathode of the diode D1 is connected to a left turn indicator lamp 142. A cathode of the diode D2 is connected to a right turn indicator lamp 143.

The plus side of the turn indicator relay 20 is connected to the line L4, and the minus side is connected to a common contact point of a turn indicator switch 23 through a diode D3. The left contact point of the turn indicator switch 23 is connected to the left turn indicator lamp 142, and the right contact point of the turn indicator switch 23 is connected to the right turn indicator lamp 143. A left indicator 241 is connected to the left turn indicator lamp 142 in parallel and a right indicator 242 is connected to the right turn indicator lamp 143 in parallel respectively. Both of the left indicator 241 and the right indicator 242 are arranged inside a meter 24 that is arranged in the front part of the motorcycle 1, and a rider can confirm the action of the left turn indicator lamp 142 and the right turn indicator lamp 143 by lighting of these right and left indicators.

The left and right turn indicator lamps 142, 143 are either driven through the turn indicator switch 23 and the turn indicator relay 20, or are driven by that the hazard relay 19 is turned ON by the command from the ECU 16. The turn indicator relay 20 performs on-operation at a flickering period for indicating the direction, and the hazard relay 19 performs on-operation at a flickering period for indicating the hazard. The flickering period of the horn relay 18 and the hazard relay 19 is determined by the ECU 16.

Inside the ECU 16, the branch line L2 is connected to an output terminal to an ignition device (CDI) not shown by a jumper line L5. In the ECU 16, a GSM module 4 and a GPS receiver 26 as a transmitting and receiving device are built in. The GSM module 4 can transmit the own vehicle position information of the motorcycle 1 to the telecommunication terminal 3 that is a predetermined entity to be notified applying a GSM (Global System for Mobile Communications) that is a standard for a cellular phone. An acceleration sensor 27 is connected to the ECU 16. The ECU 16 can be provided with an internal electric power source 25.

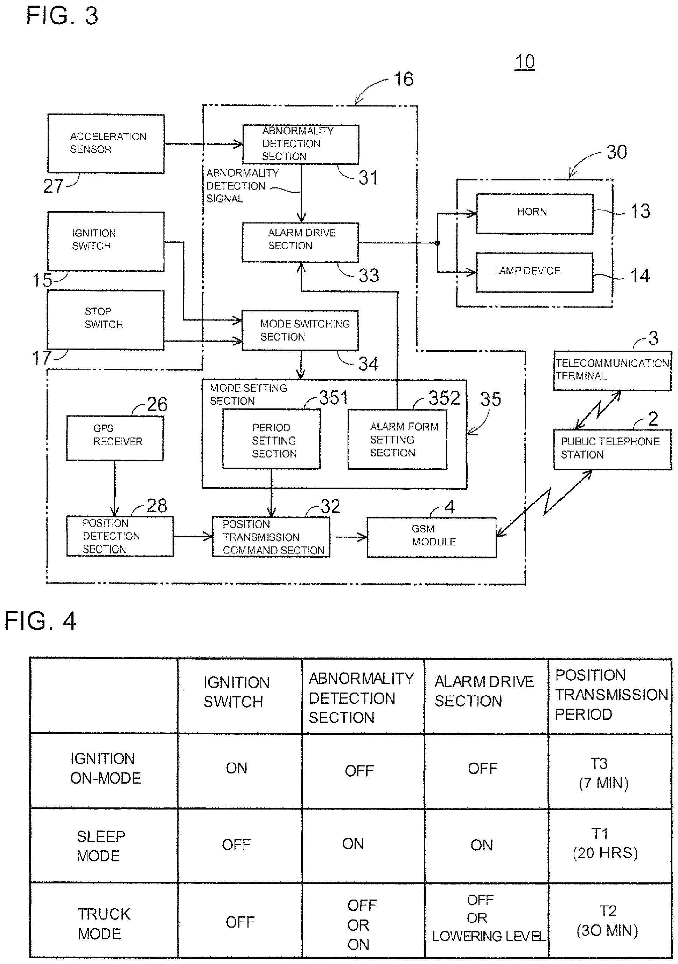

Fig. 3 is a block diagram showing the constitution of the position transmission device 10. In Fig. 3, a reference sign same with that of Fig. 2 shows an identical or similar part. The ECU 16 includes the GPS module 4 and the GPS receiver 26, and a position detection section 28, an abnormality detection section 31, a position transmission command section 32, an alarm drive section 33, a mode switching section 34 and a mode setting section 35 that are achieved by a software as the functions of a microcomputer. The position detection section 28 calculates the present position, that is the own vehicle position, of the motorcycle 1 using GPS information received by the GPS receiver 26, and can store it in a memory section of the microcomputer.

The ignition switch 15, the acceleration sensor 27 and the stop switch 17 arranged in the motorcycle 1 are connected to the input side of the ECU 16. The horn 13 and the lamp device 14 (the turn indicator lamps 142, 143 and the like) as an alarm device 30 are connected to the output side of the ECU 16.

When the acceleration sensed by the acceleration sensor 27 varies, that is when variation in the magnitude and the direction of the acceleration is detected, the abnormality detection section 31 regards that vibration, impact and the like have been applied to the motorcycle 1, and outputs an abnormality detection signal. The abnormality detection signal is inputted to the alarm drive section 33, and the alarm drive section 33 responds to the abnormality detection signal and drives the horn 13 and the lamp device 14 that are the alarm device 30. The action of the abnormality detection section 31 is forbidden while the ignition switch 15 is ON, and the detection action is allowed when the ignition switch 15 is OFF.

The position transmission command section 32 inputs the own vehicle position information showing the present position of the motorcycle 1 calculated by the position detection section 28 and a transmission command including the transmission period to the GSM module 4. The GSM module 4 modulates the own vehicle position information according to a predetermined telecommunication standard, and transmits it to the telecommunication terminal 3. The own vehicle position information transmitted is received by the telecommunication terminal 3 arranged outside the motorcycle 1 through the public telephone station 2, and the own vehicle position is displayed as a map information for example on a display screen of the telecommunication terminal 3.

In the mode setting section 35, an ignition ON mode, a sleep mode and a truck mode are set. In the ignition ON mode, the position information of the motorcycle 1 is transmitted at a third period T3 (for example 7 min period) set beforehand when the ignition switch 15 is ON. In the ignition ON mode, the abnormality detection section 31 and the alarm drive section 33 are turned OFF, and respective actions are forbidden.

In a state the ignition switch 15 is ON, it is considered that the motorcycle 1 is running and is moving over a long distance in a short time, and therefore it is configured that the own vehicle position information is transmitted to the entity to be notified at a short period so as to allow to track the motorcycle 1. In the ignition ON mode, the AC generator 7 can be driven by the engine, the electric power source can be secured sufficiently, and therefore the own vehicle position information can be transmitted frequently. Because the own vehicle position information is transmitted in a short time, even when a third party other than a user moves the motorcycle 1, the position of the motorcycle 1 can be tracked precisely. Also, even when the user is moving the motorcycle 1, because the abnormality detection section 31 and the alarm drive section 33 are turned OFF, the alarm device 30 is not driven, and therefore the user does not hear an unnecessary alarm sound.

The sleep mode is a mode in which, when the ignition switch 15 is OFF, the own vehicle position information is transmitted at the first period T1 (for example 20 hour period) longer than the third period T3 and the abnormality detection section 31 and the alarm drive section 33 are turned ON so that the alarm device 30 can be driven when the vehicle is abnormal. In the sleep mode, a situation that the motorcycle 1 stops and the rider is apart from the vehicle is assumed. In the sleep mode, the motorcycle 1 is stopped, the motorcycle 1 does not move far in a short time, and the alarm device 30 is driven when a third party other than the user moves the motorcycle 1. Accordingly, the period for transmitting the own vehicle position is made long and consumption of the battery 6 is avoided as much as possible.

In the truck mode, assumed is a situation the ignition switch is OFF in a situation that the motorcycle 1 is transported by a truck, a carrier car and the like. In the truck mode, when the ignition switch 15 is OFF, the own vehicle position information is transmitted at a second period T2 (for example 30 min period) longer than the third period T3 and shorter than the first period T1, and the output of the alarm device 30 is weakened or the drive level is lowered when the vehicle is abnormal.

Because the motorcycle 1 is under transportation in the truck mode, the own vehicle position information is transmitted comparatively frequently so as to allow tracking, the outputs of the abnormality detection section 31 and the alarm drive section 33 are weakened, and the degree of consumption of the battery 6 is reduced.

"To weaken the output" or "to lower the drive level" of the alarm device 30 means to lower the sound volume in the horn 13, and means to lower the light volume in the lamp device 14. Also, "to weaken the output" or "to lower the drive level" implies to lower the sound volume and the light volume to zero, that is to stop.

The mode setting section 35 includes a period setting section 351 setting the periods T1, T2 and T3 for transmitting the position information by the GSM module 4 and an alarm form setting section 352 setting the alarm form of the alarm device 30. As the alarm form, lowering of the sound volume of the horn 13 and the output light volume of the lamp device 14 (inclusive of zero sound level and zero light volume) is assumed. The sound volume of the horn 13 is controlled for example by changing the drive duty of the horn relay 18, and the light volume of the lamp device 14 can be controlled for example by changing the drive duty of the hazard relay 19. Also, the sound volume of the horn 13 can be controlled also by changing the voltage applied to the horn 13. For example, a variable resistor is arranged between the horn relay 18 and the horn 13, and the voltage applied to the horn 13 can be adjusted by adjusting the variable resistor by a command from the ECU 16.

According to the invention, the mode switching section 34 switches between the ignition ON mode and the sleep mode or the truck mode according to whether the ignition switch 15 is ON or OFF. Also, when the mode switching section 34 detects that a predetermined operation member out of the operation members arranged in the motorcycle 1 has been operated in a predetermined pattern, the ignition ON mode is switched to the truck mode. The pattern of operation means the times of operation of the operation member, and means, when the operation members are plural, combination of the times of operation and the order of the operation. In the present embodiment, the ignition switch 15 and the stop switch 17 are assumed as an operation member for switching the mode, and the sleep mode is switched to the truck mode when these ignition switch 15 and stop switch 17 are operated in a predetermined pattern.

The number of the operation member for switching the mode is not limited to two, and may be one or may be three or more. However, if the operation member increases excessively, operation becomes complicated, and therefore it is preferable to combine two or less operation members to be used for switching the mode.

Fig. 4 is a drawing showing the contents of the action modes. As shown in Fig. 4, in the ignition ON mode, the ignition switch 15 is ON, and both of the abnormality detection section 31 and the alarm drive section 33 are OFF (the action is stopped) . The position transmission command section 32 is in motion, and commands transmission of the own vehicle position information at a short period (third period T3).

In the sleep mode, the ignition switch 15 is OFF, and the abnormality detection section 31 and the alarm drive section 33 are ON (in motion). The position transmission command section 32 is in motion, and commands transmission of the own vehicle position information at a long period (first period T1).

In the truck mode, the ignition switch 15 is OFF, and the abnormality detection section 31 and the alarm drive section 33 are OFF, or the abnormality detection section 31 is driven and the alarm drive section 33 is driven with the drive level of the alarm device 30 being lowered (weakening the output). The own vehicle position information is transmitted at a medium period (second period T2).

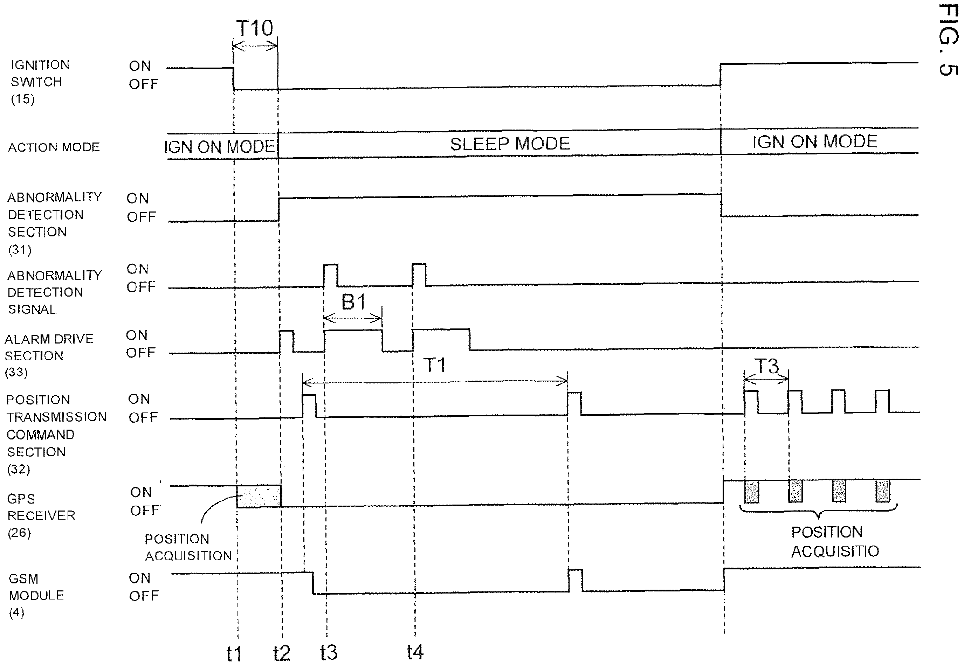

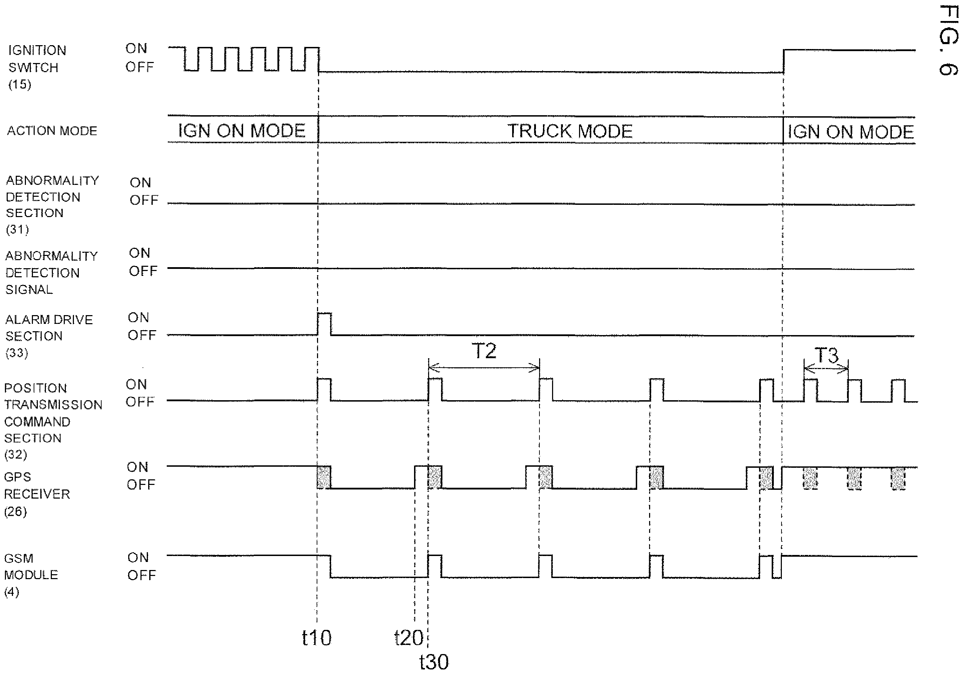

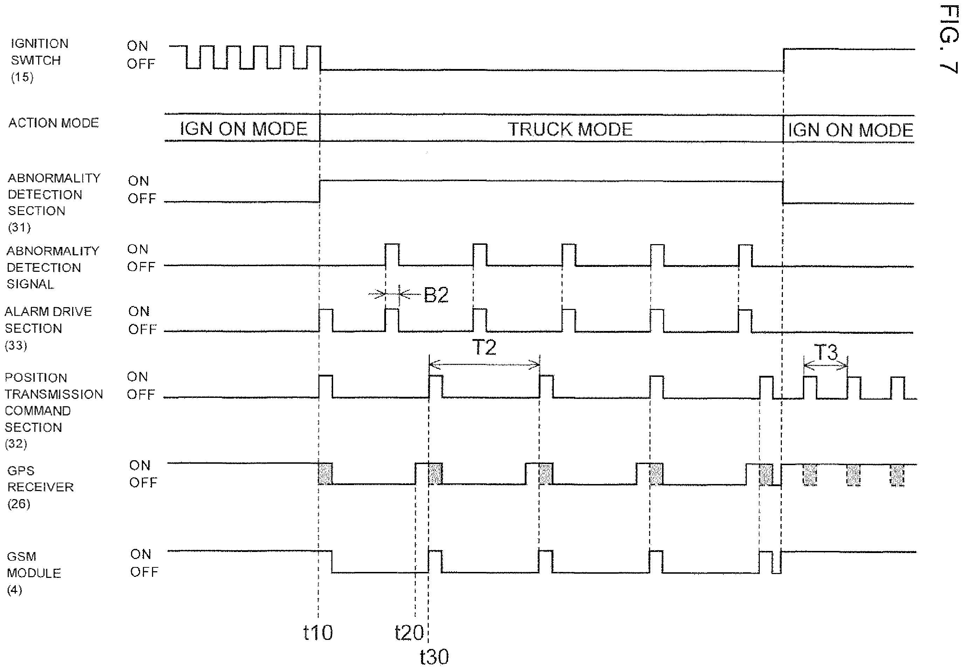

The actions of the respective modes will be described referring to Fig. 5, Fig. 6 and Fig. 7. Fig. 5 is a timing chart showing the actions in the ignition ON mode and the sleep mode, Fig. 6 and Fig. 7 are timing charts showing the actions in the ignition ON mode and the truck mode. During the actions in the respective modes, a voltage is applied from the battery 6 to the position transmission device 10 including the ECU 16.

In Fig. 5, the position transmission device 10 acts in the ignition ON mode (IGN ON MODE) while the ignition switch 15 is ON, and acts in the sleep mode (SLEEP MODE) while the ignition switch 15 is OFF. However, in switching from the ignition ON mode to the sleep mode, delay time is arranged after the ignition switch 15 is turned OFF until shifting to the sleep mode. That is, if the ignition switch 15 is turned OFF at a time point t1, the action mode is switched to the sleep mode at a time point t2 when time T10 (1 min for example) has elapsed until when the ignition ON mode is maintained. The time T10 is switching time arranged considering that, after the user stops the motorcycle 1 and turns OFF the ignition switch 15, actions of storing a crash helmet in a luggage compartment, detaching a luggage attached to a luggage carrier and putting a cover over the vehicle are performed, and the user may not depart from the vehicle immediately.

In the ignition ON mode, the abnormality detection section 31 is OFF and the detection action is forbidden. When the ignition ON mode is switched to the sleep mode, the abnormality detection section 31 is turned ON and the detection action is allowed. At a time point t2 when the action mode is switched to the sleep mode, the alarm drive section 33 drives the alarm device 30 for a predetermined short time (approximately 1 s) and outputs a command to give a signal of mode switching. Responding to the signal of mode switching, the alarm device 30 drives at least either one of the horn 13 and the lamp device 14 instantly and gives an answerback.

With respect to a detection signal of the acceleration sensor 27, it is preferable to perform the detection action at a period set to a value of 1 min or longer and shorter than 10 min for example. The reason is that consumption of the battery 6 increases when the period is short, and highly accurate abnormality detection cannot be performed when the period is long. Whenever the vehicle body is deemed to have been subjected to vibration or impact by acceleration variation of the detection signal, in the present example, the alarm drive section 33 outputs an alarm command to drive the alarm device 30 at timings t3, t4 for duration of B1.

The GPS receiver 26 acquires the GPS information at the third period T3 (7 min for example) and inputs it to the position detection section 28, and the position detection section 28 detects and stores the own vehicle position information based on the GPS information inputted. The own vehicle position information detected and the transmission command including the transmission period are supplied from the position detection section 28 to the GSM module 4. In the ignition ON mode, the GSM module 4 always is ON, and when the transmission command is inputted from the position transmission command section 32 at the third period T3, the own vehicle position information can be transmitted.

In the sleep mode, during the switching time T10, the GPS receiver 26 is turned ON, and the GPS information is acquired and is inputted to the position detection section 28. The position detection section 28 detects the own vehicle position based on the GPS information and inputs the own vehicle position to the position transmission command section 32. During the sleep mode, the position transmission command section 32 supplies the own vehicle position information and the transmission command to the GSM module 4 at the first period T1 (20 hours for example) much longer than the third period T3.

In the example of Fig. 5, the own vehicle position is acquired and is stored during the switching time T10 before switching to the sleep mode, and the own vehicle position is transmitted in the sleep mode at the first period T1. However, the present invention is not limited to this, and it may be configured that the position detection section 28 acquires the own vehicle position at a predetermined period (third period T3 for example) within the sleep mode and supplies the own vehicle position acquired to the position transmission command section 32.

In Fig. 6, actions of the ignition ON mode and the truck mode are shown. Actions of the ignition ON mode are similar to those shown in Fig. 5. However, the ignition ON mode is not switched to the truck mode (TRUCK MODE) only by turning OFF the ignition switch 15. Switching to the truck mode is performed at a time point t10 when the ignition switch 15 is turned OFF after the operation of switching the ignition switch 15 from OFF to ON by a predetermined number of times (5 times in the example of Fig. 6). That is, switching to the truck mode is performed when predetermined operation means out of those arranged in the motorcycle 1, that is the ignition switch 15 in the present example, is operated ON and OFF in a predetermined form. Switching to the truck mode may be triggered not only by operation of the ignition switch 15 but also by individual operation or combination of multiple operations of the stop switch 17 and the ignition switch 15. For example, such combination is possible that the ignition switch 15 is operated ON and OFF by 5 times and a brake lever is operated once to turn ON the stop switch 17.

In the truck mode, because the abnormality detection section 31 is stopped (is turned OFF), an abnormality detection signal is not acquired also (is OFF). Because the abnormality detection signal is not acquired, an action of the alarm drive section 33 that responds to the abnormality detection signal is also OFF, however an answerback is given. The alarm drive section 33 commands the answerback at timing t10.

In the truck mode, the GPS receiver 26 detects the position information of the motorcycle 1 and stores it in the position detection section 28 at the second period T2 (30 min) longer than the third period T3 (7 min) but shorter than the first period T1 (20 hours). For example, the position information is detected at a time point t20, and the position information is stored and is supplied to the position detection section 28 at a time point t30. The position transmission command section 32 commands to transmit the own vehicle position information supplied from the position detection section 28 to the GSM module 4 at the second period T2. The GPS receiver 26 and the GSM module 4 are turned ON at a period (second period T2) same to that at which the position transmission command section 32 commands, and contribute to transmission of the own vehicle position information.

Fig. 7 is a drawing in relation with an example of weakening an alarm given by the alarm device 30 in the truck mode, and a part similar to that of Fig. 6 shows an identical or similar action. In an example shown in Fig. 7, the alarm drive section 33 commands the alarm device 30 to give an answerback when switched to the truck mode. Accompanying it, as done in the sleep mode, whenever the abnormality is detected by the acceleration sensor 27, the alarm drive section 33 outputs a command to drive the alarm device 30. Also, in the command of the drive, a command to weaken an alarm compared with that in the sleep mode is included. For example, a width B2 of a drive command pulse outputted from the alarm drive section 33 is made shorter than a width B1 of that in the sleep mode. In the example shown in Fig. 7, similarly to the example shown in Fig. 6, the fact that the transmission period of the own vehicle position information is the second period T2 remains unchanged, and the actions in the ignition ON mode are also similar.

Although an embodiment of the present invention has been described above, the present invention is not limited to the embodiment, and a variety of alterations are possible within a scope described in the claims. For example, switching operation to the truck mode is not limited to one using an on-vehicle operation member such as an ignition switch and a stop switch. It may be an operation by a remote control switch for an immobilizer operating a vehicle from outside the vehicle, a cellular phone, or a remote operation device using a wireless LAN, and the like. In short, the switching operation only has to be performed by a predetermined operation for a vehicle using a device that limits the operable user.

Also, with respect to the transmission periods T1, T2 and T3 of the own vehicle position information, a specific period can be changed optionally as far as the relation of T1>T2>T3 is maintained.

Further, the form of the answerback may be changed between a case the sleep mode is selected and a case the truck mode is selected. For example, the form of the answerback can be provided with the difference by the timbre, sound height, and the sound volume of the horn, or light quantity, flickering period and the like of the lighting device, and the like. Furthermore, the answerback is not limited to one given by the alarm device 30 arranged in the vehicle from the beginning such as the horn 13 and the lamp device 14, but it may be given using a post-attached speaker for example that is capable of giving an optional sound.

### [Reference Signs List]

- 1...: Motorcycle
- 3...: Telecommunication terminal
- 4...: Transmitting and receiving device (GSM module)
- 10...: Position transmission device
- 13...: Horn
- 14...: Lamp device
- 15...: Ignition switch
- 16...: ECU
- 17...: Stop switch
- 18...: Horn relay
- 19...: Hazard relay
- 20...: Turn indicator relay
- 24...: Meter
- 26...: GPS receiver
- 27...: Acceleration sensor
- 28...: Position detection section
- 30...: Alarm device
- 31...: Abnormality detection section
- 32...: Position transmission command section
- 33...: Alarm drive section
- 34...: Mode switching section
- 35...: Mode setting section

## Claims

1. A position transmission device adapted to be installed in a vehicle, comprising:
abnormality detection means (31) that outputs an abnormality detection signal when an abnormality state of the vehicle is detected based on acceleration variation occurred in the vehicle;
an alarm device (30) that responds to the abnormality detection signal and gives an alarm, and
transmission means (4) that transmits position information of the vehicle to a predetermined entity to be notified;
**characterised in that** the position transmission device also comprises mode switch means (34) provided with the following action modes:
an ignition ON mode when the state of the ignition switch (15) of the vehicle is ON, in which
- the transmission means (4) transmits the position information at a third period, and
- the abnormality detection section (31) and the alarm device (30) are switched off; and
a sleep mode when the state of the ignition switch (15) of the vehicle is OFF, in which
- the transmission means (4) transmits the position information at a first period (T1), and
- the alarm device (30) is driven whenever the abnormality detection signal is outputted; and
a truck mode when the state of the ignition switch (15) of the vehicle is OFF, and when predetermined operation means out of the operation means that control the actions of the vehicle are operated in a predetermined operation pattern in which
- the transmission means (4) transmits the position information at a second period (T2) shorter than the first period (T1) but longer than the third period (T3), and
- the position transmission device responds to the abnormality detection signal by lowering the output of the alarm device (30) below the level of output in the sleep mode;
wherein the mode switch means (34) switches the action mode to the ignition ON mode when the ignition switch (15) of the vehicle is switched ON in each of the sleep and truck mode;
wherein the mode switch means (34) comprises a mode switching section which switches between the ignition ON mode and the sleep mode or the truck mode according to whether the ignition switch is ON or OFF.

2. The position transmission device adapted to be installed in a vehicle according to claim 1, wherein actions of the abnormality detection means (31) and the alarm device (30) are stopped in the truck mode.

3. The position transmission device adapted to be installed in a vehicle according to claim 1 or claim 2, wherein it is constituted to give an answerback respectively in entering the sleep mode and the truck mode.

4. The position transmission device adapted to be installed in a vehicle according to claim 3, wherein the answerback is driven in a mutually different form in entering the sleep mode and in entering the truck mode.

5. The position transmission device adapted to be installed in a vehicle according to claim 3 or claim 4, wherein the answerback is given using the alarm device.

6. The position transmission device adapted to be installed in a vehicle according to claim 5, wherein the alarm device (30) is either a horn (13) or a lamp device (14).

## Patentansprüche

1. Positionsübermittlungsvorrichtung, welche dazu eingerichtet ist, in einem Fahrzeug installiert zu sein, umfassend:
ein Anomalie-Detektionsmittel (31), welches ein Anomalie-Detektionssignal ausgibt, wenn ein Anomaliezustand des Fahrzeugs auf Grundlage einer Beschleunigungsvariation detektiert wird, welche in dem Fahrzeug aufgetreten ist;
eine Alarmvorrichtung (30), welche auf das Anomalie-Detektionssignal reagiert und einen Alarm ausgibt, und
ein Übermittlungsmittel (4), welches Positionsinformationen des Fahrzeugs zu einer vorbestimmten zu benachrichtigenden Instanz übermittelt;
**dadurch gekennzeichnet, dass** die Positionsübermittlungsvorrichtung ebenfalls ein Modus-Umschaltmittel (34) umfasst, welches mit den folgenden Vorgangsmodi bereitgestellt ist:
einem Zündung-EIN-Modus, wenn der Zustand des Zündungsschalters (15) des Fahrzeugs EIN ist, in welchem:
- das Übermittlungsmittel (4) die Positionsinformationen bei einer dritten Periode übermittelt, und
- der Anomalie-Detektionsabschnitt (31) und die Alarmvorrichtung (30) ausgeschaltet sind; und
einem Schlaf-Modus, wenn der Zustand des Zündungsschalters (15) des Fahrzeugs AUS ist, in welchem:
- das Übermittlungsmittel (4) die Positionsinformationen bei einer ersten Periode (T1) übermittelt, und
- die Alarmvorrichtung (3) betrieben wird, wann immer das Anomalie-Detektionssignal ausgegeben wird; und
einem Transporter-Modus, wenn der Zustand des Zündungsschalters (15) des Fahrzeugs AUS ist und wenn vorbestimmte Betriebsmittel aus den Betriebsmitteln, welche die Vorgänge des Fahrzeugs steuern/regeln, in einem vorbestimmten Betriebsmuster betrieben werden, in welchem:
- das Übermittlungsmittel (4) die Positionsinformationen bei einer zweiten Periode (T2) übermittelt, welche kürzer als die erste Periode (T1), jedoch länger als die dritte Periode (T3), ist, und
- die Positionsübermittlungsvorrichtung auf das Anomalie-Detektionssignal durch Verringern der Ausgabe der Alarmvorrichtung (30) unter den Ausgabepegel in dem Schlaf-Modus reagiert;
wobei das Modus-Umschaltmittel (34) den Vorgangsmodus in den Zündung-EIN-Modus umschaltet, wenn der Zündungsschalter (15) des Fahrzeugs sowohl in dem Schlaf- als auch dem Transporter-Modus EIN geschaltet ist;
wobei das Modus-Umschaltmittel (34) einen Modus-Umschaltabschnitt umfasst, welcher zwischen dem Zündung-EIN-Modus und dem Schlaf-Modus oder dem Transporter-Modus gemäß dessen umschaltet, ob der Zündungsschalter EIN oder AUS ist.

2. Positionsübermittlungsvorrichtung, welche dazu eingerichtet ist, in einem Fahrzeug installiert zu sein, nach Anspruch 1, wobei Vorgänge des Anomalie-Detektionsmittels (31) und der Alarmvorrichtung (30) in dem Transport-Modus gestoppt werden.

3. Positionsübermittlungsvorrichtung, welche dazu eingerichtet ist, in einem Fahrzeug installiert zu sein, nach Anspruch 1 oder Anspruch 2, wobei sie dazu ausgebildet ist, eine Rückmeldung sowohl beim Eintreten in den Schlaf-Modus als auch in den Transporter-Modus zu geben.

4. Positionsübermittlungsvorrichtung, welche dazu eingerichtet ist, in einem Fahrzeug installiert zu sein, nach Anspruch 3, wobei die Rückmeldung bei einem Eintreten in den Schlaf-Modus und einem Eintreten in den Transport-Modus in einer voneinander verschiedenen Form betrieben wird.

5. Positionsübermittlungsvorrichtung, welche dazu eingerichtet ist, in einem Fahrzeug installiert zu sein, nach Anspruch 3 oder Anspruch 4, wobei die Rückmeldung unter Verwendung der Alarmvorrichtung gegeben wird.

6. Positionsübermittlungsvorrichtung, welche dazu eingerichtet ist, in einem Fahrzeug installiert zu sein, nach Anspruch 5, wobei die Alarmvorrichtung (30) entweder eine Hupe (13) oder eine Lampenvorrichtung (14) ist.

## Revendications

1. Dispositif de transmission de position adapté à être installé dans un véhicule, comprenant :
un moyen de détection d'anomalie (31) qui émet un signal de détection d'anomalie lorsqu'un état d'anomalie du véhicule est détecté sur la base d'une variation d'accélération survenant dans le véhicule ;
un dispositif d'alarme (30) qui répond au signal de détection d'anomalie et donne une alarme, et
un moyen de transmission (4) qui transmet les informations de position du véhicule à une entité prédéterminée devant être notifiée ;
le dispositif de transmission de position étant **caractérisé en ce qu'**il comprend aussi un moyen de commutation de mode (34) doté des modes d'action suivants :
un mode allumage "ON" lorsque l'état du commutateur d'allumage (15) du véhicule est ON, dans lequel
- le moyen de transmission (4) transmet les informations de position à une troisième période, et
- la section de détection d'anomalie (31) et le dispositif d'alarme (30) sont éteints ; et
un mode veille lorsque l'état du commutateur d'allumage (15) du véhicule est OFF, dans lequel
- le moyen de transmission (4) transmet les informations de position à une première période (T1), et
- le dispositif d'alarme (30) est actionné à chaque fois que le signal de détection d'anomalie est émis ; et
un mode camion lorsque l'état du commutateur d'allumage (15) du véhicule est OFF, et lorsque les moyens d'opération prédéterminés parmi les moyens d'opération qui contrôlent les actions du véhicule sont actionnés dans un schéma d'opération prédéterminé dans lequel
- le moyen de transmission (4) transmet les informations de position à une seconde période (T2) plus courte que la première période (T1) mais plus longue que la troisième période (T3), et
- le dispositif de transmission de position répond au signal de détection d'anomalie en abaissant la sortie du dispositif d'alarme (30) en dessous du niveau de sortie dans le mode veille ;
dans lequel le moyen de commutation de mode (34) commute le mode action au mode allumage ON lorsque le commutateur d'allumage (15) du véhicule est mis sur ON dans chacun du mode veille et camion ;
dans lequel le moyen de commutation de mode (34) comprend une section de commutation de mode qui commute entre le mode allumage ON et le mode veille ou le mode camion selon que le commutateur d'allumage est ON ou OFF.

2. Dispositif de transmission de position adapté pour être installé dans un véhicule selon la revendication 1, dans lequel les actions du moyen de détection d'anomalie (31) et du dispositif d'alarme (30) sont stoppées dans le mode camion.

3. Dispositif de transmission de position adapté pour être installé dans un véhicule selon la revendication 1 ou la revendication 2, dans lequel il est prévu de donner une réponse respectivement lors de l'entrée dans le mode veille et le mode camion.

4. Dispositif de transmission de position adapté pour être installé dans un véhicule selon la revendication 3, dans lequel la réponse est actionnée sous une forme mutuellement différente lors de l'entrée dans le mode veille et l'entrée dans le mode camion.

5. Dispositif de transmission de position adapté pour être installé dans un véhicule selon la revendication 3 ou la revendication 4, dans lequel la réponse est donnée en utilisant le dispositif d'alarme.

6. Dispositif de transmission de position adapté pour être installé dans un véhicule selon la revendication 5, dans lequel le dispositif d'alarme (30) est soit un avertisseur (13) soit un dispositif de lampe (14).
